Europäisches Patentamt

European Patent Office

Office européen des brevets

(19)

(11) Numéro de publication : **0 151 894**
**B1**

(12) # FASCICULE DE BREVET EUROPÉEN

(45) Date de publication du fascicule du brevet :
16.06.87

(21) Numéro de dépôt : 84402705.2

(22) Date de dépôt : 21.12.84

(51) Int. Cl.⁴ : **A 47 J 37/06**

(54) **Appareil de cuisson portatif comportant une enceinte et une plaque de cuisson.**

(30) Priorité : 03.02.84 FR 8401661

(43) Date de publication de la demande :
21.08.85 Bulletin 85/34

(45) Mention de la délivrance du brevet :
16.06.87 Bulletin 87/25

(84) Etats contractants désignés :
**DE GB IT**

(56) Documents cités :
**DE-A- 2 211 281**
**DE-A- 2 324 712**
**DE-A- 3 007 266**
**DE-A- 3 024 831**
**DE-U- 7 806 451**
**FR-A- 1 433 589**
**FR-A- 2 302 067**
**FR-A- 2 334 059**
**GB-A- 485 603**
**US-A- 2 738 723**

(73) Titulaire : **SEB S.A.**

**F-21260 Selongey (FR)**

(72) Inventeur : **Mayeur, Jacques**
**7 rue du Cep**
**F-74600 Seynod (FR)**

(74) Mandataire : **Bouju, André**
**Cabinet Bouju 38 avenue de la Grande Armée**
**F-75017 Paris (FR)**

## Description

La présente invention concerne un appareil de cuisson portatif pouvant notamment être placé sur une table et comportant une enceinte constituant un four et une plaque de cuisson placée au-dessus de cette enceinte.

Un tel appareil permet ainsi de cuire ou de chauffer des aliments soit dans le four soit sur la plaque de cuisson supérieure soit simultanément dans ce four et sur cette plaque de cuisson.

Ce type d'appareil présente des dimensions relativement réduites pour qu'il puisse être porté aisément par une seule personne et être placé sur une table de salle à manger où les convives pourront eux-mêmes surveiller la cuisson des aliments.

On connaît deux types différents d'appareil de ce genre.

Dans un premier type d'appareil, (DE-A-2 211 281) une résistance électrique de chauffage unique est prévue pour chauffer l'intérieur de l'enceinte du four et la plaque de cuisson. L'inconvénient majeur de ce type d'appareil est qu'il n'est pas possible de régler le chauffage du four indépendamment de celui de la plaque de cuisson et vice versa. Par ailleurs, dans ce type d'appareil, l'emplacement de la résistance de chauffage est nécessairement mal adapté au chauffage optimal simultané de l'enceinte du four et de la plaque de cuisson.

Dans le second type d'appareil connu, deux résistances de chauffage sont prévues, l'une à la partie supérieure de l'appareil sous la plaque de cuisson, et l'autre dans l'enceinte du four. La puissance de chauffage de ces résistances est réglable séparément au moyen d'un thermostat, ce qui permet d'obtenir un chauffage satisfaisant de la plaque de cuisson et de l'intérieur du four. Cependant, la réalisation d'un tel type d'appareil est onéreuse et est de ce fait incompatible avec celle d'un appareil de cuisson présentant des dimensions relativement réduites pour être portatif.

Par ailleurs, on constate que les thermostats bimétalliques qui sont utilisés dans les appareils bon marché donnent lieu à un différentiel de régulation de la température relativement élevé, qui ne permet par conséquent pas d'obtenir à l'intérieur du four une température suffisamment constante pour assurer de bonnes conditions de cuisson des aliments.

Cet inconvénient est d'autant plus sensible dans le cas des appareils présentant une enceinte de four de dimensions réduites réalisée à partir de matériaux minces et bon marché, car dans ce cas la faible inertie thermique ne permet pas de compenser les effets dûs à un important différentiel de régulation thermique.

Le but de la présente invention est de créer un appareil de cuisson portatif comportant une enceinte de four et une plaque supérieure de cuisson qui soit de réalisation économique, commode à utiliser et qui permette également de réaliser des conditions optimales de chauffage à l'intérieur de l'enceinte de four et pour la plaque de cuisson selon les désirs de l'utilisateur.

L'appareil de cuisson portatif visé par l'invention comprend une enceinte constituant un four dont l'une au moins des faces latérales est fermée par une porte, une résistance électrique de chauffage s'étendant à l'intérieur de cette enceinte, l'appareil comprenant en outre à sa partie supérieure, au-dessus de l'enceinte, une plaque de cuisson sous laquelle s'étend une résistance électrique de chauffage et des moyens pour régler la température de chauffage de cette plaque de cuisson et à l'intérieur de l'enceinte.

Suivant l'invention, cet appareil est caractérisé en ce que la résistance électrique de chauffage qui s'étend sous la plaque de cuisson est située dans un compartiment séparé de l'enceinte par une plaque métallique communiquant avec l'enceinte par au moins une ouverture, en ce que cette résistance est reliée à un thermostat réglable associé à une sonde de température s'étendant dans ledit compartiment, en ce que la résistance électrique placée dans l'enceinte est reliée directement au réseau au moyen d'un interrupteur permettant de couper l'alimentation de cette résistance indépendamment de celle de la résistance électrique s'étendant dans le compartiment disposé sous la plaque de cuisson.

L'appareil de cuisson conforme à l'invention comprend donc deux résistances distinctes, l'une placée dans l'enceinte du four et l'autre sous la plaque de cuisson, ce qui permet de réaliser les conditions optimales de chauffage de cette enceinte et de cette plaque de cuisson.

Lorsque l'utilisateur désire cuire des aliments dans le four, les deux résistances sont alimentées, celle disposée dans l'enceinte étant directement reliée au secteur et donc non réglable, celle située sous la plaque de cuisson étant réglable au moyen du thermostat.

La résistance chauffante disposée dans l'enceinte du four diffuse dans cette dernière une puissance calorifique constante. La résistance chauffante disposée sous la plaque de cuisson diffuse dans l'enceinte du four à travers la plaque métallique située sous cette résistance, une puissance calorifique réglable au moyen du thermostat.

Compte tenu des déperditions calorifiques vers l'extérieur de l'appareil, on obtient à l'intérieur de l'enceinte, au bout d'un temps déterminé, une température de chauffage sensiblement constante qui est réglable au moyen du thermostat.

On constate que le différentiel de régulation de la température de l'enceinte est nettement inférieur à celui qui est obtenu dans le cas où le chauffage est réalisé avec une résistance unique réglée au moyen d'un thermostat classique.

La plaque de séparation située sous la résistance du compartiment supérieur évite que les aliments disposés dans l'enceinte soient soumis directement aux radiations susceptibles de griller ces aliments au lieu de les cuire.

La ou les ouvertures situées dans la plaque de séparation permettent de doser la répartition de la puissance calorifique émise par la résistance, vers la plaque de cuisson et vers l'enceinte du four.

Lorsque l'utilisateur désire cuire des aliments sur la plaque de cuisson, il lui suffit de couper l'alimentation électrique de la résistance inférieure et de régler la puissance de chauffage de la résistance supérieure au moyen du thermostat.

Ainsi, l'utilisateur peut faire fonctionner l'appareil à la fois en position four et en position grillage par la plaque de cuisson, en agissant sur un seul thermostat. On obtient dans les deux cas des conditions optimales de régulation de la température de cuisson.

Outre l'interrupteur qui coupe l'alimentation électrique de la résistance inférieure lorsque l'utilisateur désire griller des aliments sur la plaque de cuisson, l'appareil comprend avantageusement un interrupteur pour commander l'alimentation électrique simultanée des deux résistances, pour faire fonctionner l'appareil en four.

D'autres particularités et avantages de l'invention apparaîtront encore dans la description ci-après.

Aux dessins annexés, donnés à titre d'exemples non limitatifs :

la figure 1 est une vue en coupe longitudinale d'un appareil de cuisson conforme à l'invention,

la figure 2 est une vue de dessus de l'appareil, après enlèvement de la plaque supérieure de cuisson, l'une des portes latérales étant ouverte.

la figure 3 est une vue en coupe de la partie supérieure de l'appareil, après enlèvement de la plaque de cuisson, suivant un plan perpendiculaire à la figure 1,

la figure 4 est une vue montrant le schéma électrique d'alimentation et de réglage des deux résistances électriques de l'appareil.

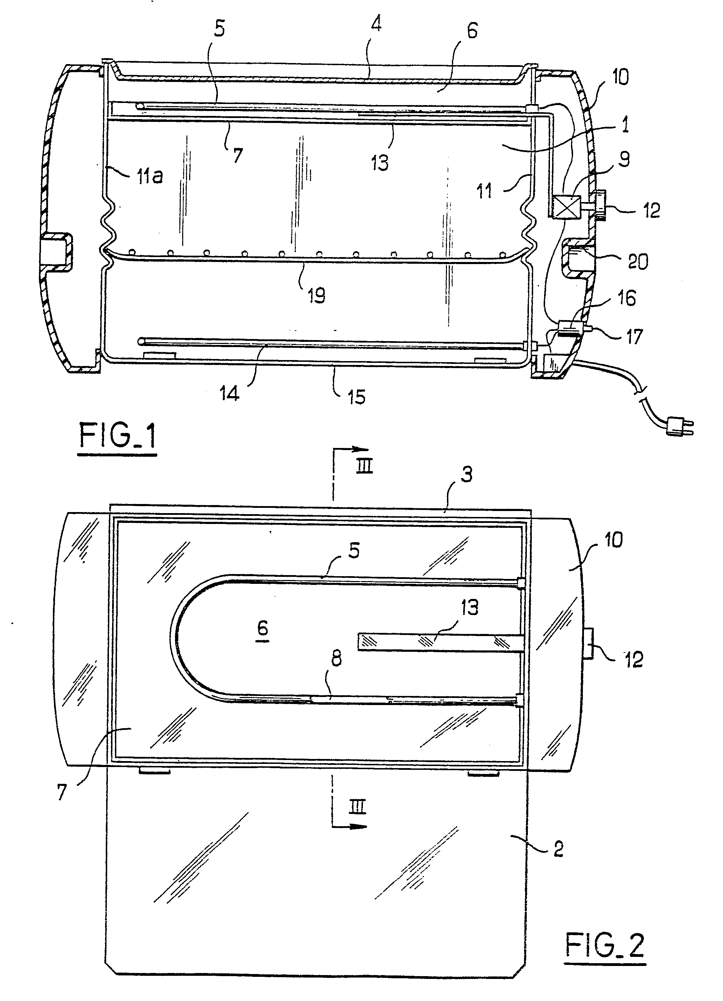

Dans la réalisation des figures 1 et 2, l'appareil de cuisson portatif conforme à l'invention, comporte une enceinte 1 parallélépipédique constituant un four dont les deux grandes faces latérales sont fermées chacune par une porte 2, 3 en verre, articulée à la partie inférieure de l'appareil.

L'appareil comprend à sa partie supérieure, au-dessus de l'enceinte 1, une plaque de cuisson 4 amovible sous laquelle s'étend une résistance électrique de chauffage 5.

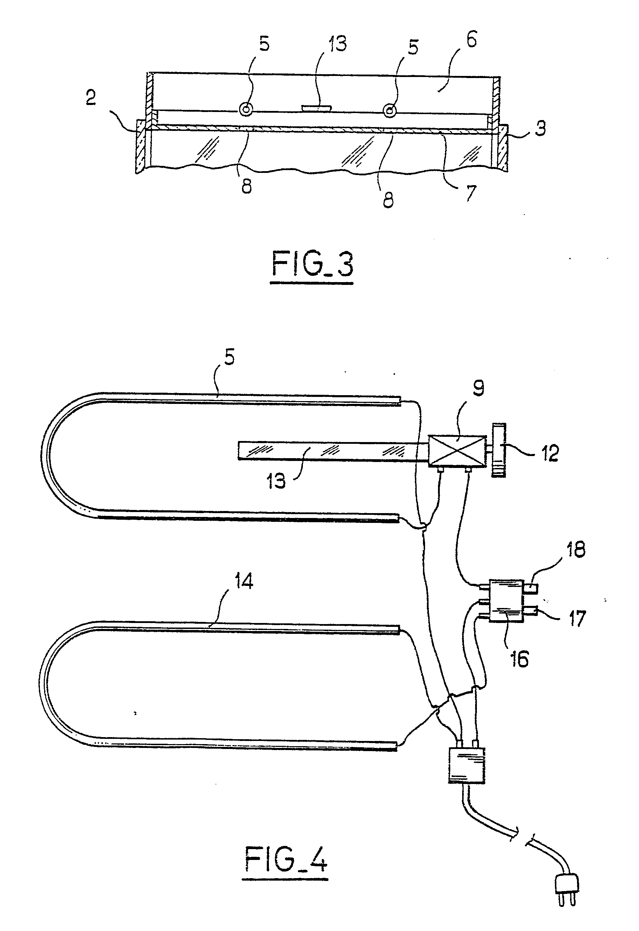

Cette résistance électrique de chauffage 5 s'étend sous la plaque de cuisson 4 dans un compartiment 6 séparé de l'enceinte 1 par une plaque métallique 7 qui communique avec l'enceinte 1 par une ou plusieurs ouvertures 8 (voir figures 2 et 3). Dans l'exemple représenté, cette ouverture est une fente 8 qui s'étend sous la résistance de chauffage 5, la largeur de cette fente 8 correspondant sensiblement au diamètre de cette résistance 5.

La résistance électrique 5 est reliée à un thermostat bi-métallique 9 classique, logé dans un capot 10 en matière isolante qui recouvre la paroi latérale 11 de l'enceinte 1. Ce thermostat 9 comprend un bouton de réglage 12 accessible à l'utilisateur. Le thermostat 9 est relié à une sonde de températures 13 qui s'étend dans le compartiment 6.

Cette sonde de températures 13 est constituée dans l'exemple représenté, par une lamelle en métal bon conducteur de la chaleur tel que de l'aluminium qui s'étend sensiblement au milieu du compartiment 6 entre la plaque de cuisson 4 et la plaque de séparation 7 et sur une distance égale au moins au tiers de la longueur du compartiment 6.

Une seconde résistance électrique 14 s'étend près du fond 15 de l'enceinte 1. Cette résistance 14 est reliée directement au réseau (c'est-à-dire sans passer par un thermostat) au moyen d'un interrupteur 16 permettant de couper l'alimentation de cette résistance 14 indépendamment de celle de la résistance électrique 5 qui s'étend dans le compartiment 6 disposé sous la plaque de cuisson 4.

Cet interrupteur 16 comprend à cet effet un bouton 17 (voir figure 4). Il comprend un second bouton 18 pour commander simultanément l'alimentation des deux résistances électriques 5 et 14.

La résistance électrique 14 s'étendant près du fond 15 de l'enceinte 1 présente une puissance inférieure à celle disposée dans le compartiment supérieur 6. Cette puissance est par exemple égale à 350 W pour la résistance 14 et égale à 700 W pour la résistance 5.

La plaque de cuisson 4 présente de préférence une surface traitée pour absorber les radiations calorifiques émises par les résistances 5 et 14. Ce traitement peut consister en une attaque acide donnant à la plaque 7 une surface rugueuse non réfléchissante.

Les faces latérales 11 et 11a de l'enceinte 1 sont, pour des raisons économiques, réalisées en tôle non calorifugées extérieurement pour favoriser les déperditions de chaleur vers l'extérieur.

On va maintenant décrire le fonctionnement de l'appareil de cuisson conforme à l'invention.

Lorsque l'utilisateur désire cuire des aliments à l'intérieur de l'enceinte 1, c'est-à-dire utiliser l'appareil en four, il actionne le bouton 18 de l'interrupteur 16 pour commander la mise en route simultanée du chauffage, des résistances 5 et 14 et il règle le thermostat 9 en fonction de la température qu'il désire obtenir à l'intérieur de l'enceinte 1.

La résistance inférieure 14 qui est alimentée en permanence, diffuse sa chaleur par rayonnement direct à l'intérieur de l'enceinte 1, tandis que la résistance supérieure 5 régulée au moyen du thermostat 9 diffuse sa chaleur en partie vers la plaque de cuisson 4 et en partie vers l'enceinte 1 par l'intermédiaire de la plaque de séparation 7.

La puissance de chauffage de la résistance inférieure 14 est constante, de sorte qu'elle chauffe l'enceinte jusqu'à une température d'équilibre définie par construction de l'appareil, compte tenu des déperditions de calories vers l'extérieur, notamment à travers les parois latérales non calorifugées 11 et 11a et à travers les portes en verre 2 et 3.

L'apport de chaleur fourni par la résistance supérieure 5 étant réglable, l'utilisateur peut modifier la température à l'intérieur de l'enceinte 1 au moyen du thermostat 9, par exemple dans une gamme de températures comprises entre 150 et 300 °C.

Le thermostat 9 fonctionne lorsque la température de la sonde 13 placée dans le compartiment 6 atteint la température de consigne qui peut être décalée par rapport à celle régnant à l'intérieur de l'enceinte 1.

On constate que le différentiel de régulation de la température à l'intérieur de l'enceinte 1 est inférieur à 40 °C. Cette valeur est nettement inférieure à celle constatée dans le cas de l'utilisation d'un thermostat bi-métallique classique dont la sonde serait placée dans l'enceinte où est disposée la résistance chauffante qui est régulée au moyen de ce thermostat.

Lorsque l'utilisateur désire griller des aliments sur la plaque de cuisson 4, il lui suffit de couper l'alimentation électrique de la résistance inférieure 14 en actionnant le bouton 17 de l'interrupteur et en réglant le thermostat 9 à la température désirée qui est généralement inférieure à celle utilisée en position four.

L'appareil conforme à l'invention permet donc au moyen d'un thermostat unique et de deux résistances distinctes, de réaliser à la fois la cuisson dans le four et la cuisson sur la plaque de cuisson, dans des conditions optimales de régulation de la température de chauffage. La construction de l'appareil de cuisson est par conséquent simple et peu onéreuse.

Bien entendu, l'invention n'est pas limitée à l'exemple que l'on vient de décrire et on peut apporter à celui-ci de nombreuses modifications sans sortir du cadre de l'invention.

Ainsi, la fente 8 ménagée dans la plaque de séparation 7 peut être remplacée par une ou plusieurs ouvertures de formes différentes, disposées ou non sous la résistance 5.

La forme des résistances 5 et 14 pourrait également être différente de celle représentée sur les dessins annexés.

L'intérieur de l'enceinte 1 peut, bien entendu, comporter des accessoires classiques tels qu'une grille 19 et un plateau de collecte du jus de cuisson.

Les capots 10 en matière isolante recouvrant les parois latérales 11 et 11a peuvent comporter un évidement 20 pour permettre la préhension de l'appareil.

L'appareil de cuisson pourrait, bien entendu, ne comporter qu'une seule porte.

Dans une version simplifiée, la résistance supérieure 5 pourrait être reliée directement au secteur, dès qu'on branche l'appareil, un interrupteur unique étant prévu pour couper l'alimentation électrique de la résistance inférieure 14, lorsqu'on veut utiliser l'appareil en gril. En mettant cet interrupteur en position marche, les deux résistances 5 et 14 sont alimentées, et l'appareil fonctionne en four.

Par ailleurs, le fait que l'appareil comporte deux portes opposées, non seulement rend l'intérieur du four très accessible aux utilisateurs mais contribue avec le fait que les parois latérales sont en tôle mince non calorifugée, à l'obtention d'un équilibre thermique très rapide. En effet, s'il n'existait qu'une seule porte et si les parois latérales étaient épaisses et/ou calorifugées, la température à l'intérieur du four augmenterait en continu étant donné que la résistance inférieure 14 est alimentée en permanence.

**Revendications**

1. Appareil de cuisson portatif comportant une enceinte (1) constituant un four dont l'une au moins des faces latérales est fermée par une porte (3), une résistance électrique de chauffage (14) s'étendant à l'intérieur de cette enceinte, l'appareil comprenant en outre à sa partie supérieure au-dessus de l'enceinte 1, une plaque de cuisson (4) sous laquelle s'étend une résistance électrique de chauffage (5) et des moyens pour régler la température de chauffage de cette plaque de cuisson (4) et à l'intérieur de l'enceinte (1), caractérisé en ce que la résistance électrique de chauffage (5) s'étendant sous la plaque de cuisson (4) est située dans un compartiment (6) séparé de l'enceinte (1) par une plaque métallique (7) communiquant avec l'enceinte (1) par au moins une ouverture (8), en ce que cette résistance (5) est reliée à un thermostat réglable (9) associé à une sonde de température (13) s'étendant dans ledit compartiment (6), en ce que la résistance électrique (14) placée dans l'enceinte (1) est reliée directement au réseau au moyen d'un interrupteur (16) permettant de couper l'alimentation de cette résistance indépendamment de celle de la résistance électrique (5) s'étendant dans le compartiment (6) disposé sous la plaque de cuisson (4).

2. Appareil de cuisson conforme à la revendication 1, caractérisé en ce qu'il comprend un interrupteur (16, 18) pour commander l'alimentation simultanée des deux résistances électriques (5, 14).

3. Appareil de cuisson conforme à l'une des revendications 1 ou 2, caractérisé en ce que la résistance électrique (14) s'étendant dans l'enceinte (1) est placée près du fond (15) de celle-ci et présente une puissance inférieure à celle disposée dans le compartiment supérieur (6).

4. Appareil de cuisson conforme à l'une des revendications 1 à 3, caractérisé en ce que la plaque métallique (7) présente une fente (8) qui s'étend sous la résistance de chauffage (5) et dont la largeur correspond sensiblement au diamètre de cette résistance.

5. Appareil de cuisson conforme à l'une des revendications 1 à 4, caractérisé en ce que la plaque (4) présente une surface traitée pour absorber les radiations calorifiques émises par la résistance (5).

6. Appareil de cuisson conforme à l'une des revendications 1 à 5, caractérisé en ce que la sonde de températures (13), placée dans le compartiment supérieur (6) est une lamelle en métal bon conducteur de la chaleur qui s'étend sensiblement au milieu du compartiment (6) entre la plaque de cuisson (4) et la plaque de séparation (7) et sur une distance égale au moins au tiers de la longueur du compartiment.

7. Appareil de cuisson conforme à l'une des revendications 1 à 6, caractérisé en ce que l'enceinte (1) présente deux faces latérales opposées, fermées chacune par une porte en verre (2, 3).

8. Appareil de cuisson conforme à la revendication 7, caractérisé en ce que les deux autres faces latérales (11, 11a) de l'enceinte (1) sont en tôle et non calorifugées.

**Claims**

1. Portable cooking appliance comprising a chamber (1) constituting an oven in which at least one of the lateral faces is closed by a door (3), an electric heating resistor (14) which extends within this chamber, the appliance being further provided at the top above the chamber 1 with a cooking hotplate (4) beneath which extends an electric heating resistor (5) and means for regulating the heating temperature of this hotplate (4) and within the chamber (1), characterized in that the electric heating resistor (5) which extends beneath the hotplate (4) is located within a compartment (6) which is separated from the chamber (1) by means of a metal plate (7) which communicates with the chamber (1) by means of at least one opening (8), that this heating resistor (5) is connected to an adjustable thermostat (9) associated with a temperature probe (13) which extends within said compartment (6), that the electric resistor (14) placed within the chamber (1) is connected directly to the power system by means of a switch (16) for interrupting the current supply to this resistor independently of the supply to the electric resistor (5) which extends within the compartment (6) located beneath the hotplate (4).

2. Cooking appliance in accordance with claim 1, characterized in that it comprises a switch (16, 18) for initiating simultaneous supply of current to the two electric resistors (5, 14).

3. Cooking appliance in accordance with either of claims 1 or 2, characterized in that the electric resistor (14) which extends within the chamber (1) is placed near the end-wall (15) of this latter and has a lower power rating than the resistor located within the upper compartment (6).

4. Cooking appliance in accordance with any one of claims 1 to 3, characterized in that the metal plate (7) has a slot (8) which extends beneath the heating resistor (5) and the width of which corresponds substantially to the diameter of this resistor.

5. Cooking appliance in accordance with any one of claims 1 to 4, characterized in that the plate (4) has a surface which is treated for the purpose of absorbing the heat radiation emitted by the resistor (5).

6. Cooking appliance in accordance with any one of claims 1 to 5, characterized in that the temperature probe (13) placed within the upper compartment (6) is a strip of metal having good thermal conductivity which extends substantially at the centre of the compartment (6) between the hotplate (4) and the separating plate (7) and over a distance equal to at least one-third of the length of the compartment.

7. Cooking appliance in accordance with any one of claims 1 to 6, characterized in that the chamber (1) has two opposite lateral faces each closed by a glass door (2, 3).

8. Cooking appliance in accordance with claim 7, characterized in that the other two lateral faces (11, 11a) of the chamber (1) are of sheet metal and are not heat-insulated.

**Patentansprüche**

1. Tragbares Kochgerät mit einem umschlossenen Raum (1), der einen Ofen bildet, wovon wenigstens eine der Seitenflächen durch eine Tür (3) geschlossen ist, mit einem elektrischen Heizwiderstand (14), der sich im Inneren dieses umschlossenen Raumes erstreckt, wobei das Gerät ferner an seinem oberen Teil oberhalb des umschlossenen Raumes 1 eine Kochplatte (4) aufweist, unter welcher sich ein elektrischer Heizwiderstand (5) erstreckt, sowie Mitteln zur Regulierung der Heiztemperatur dieser Kochplatte (4) und im Inneren des umschlossenen Raumes (1), dadurch gekennzeichnet, daß der elektrische Heizwiderstand (5), welcher sich unter der Kochplatte (4) erstreckt, in einem Abteil (6) liegt, welches von dem umschlossenen Raum (1) durch eine Metallplatte (7) getrennt ist, die mit dem umschlossenen Raum (1) über wenigstens eine Öffnung (8) in Verbindung ist, daß dieser Widerstand (5) mit einem einstellbaren Thermostat (9) verbunden ist, dem eine Temperatursonde (13) zugeordnet ist, welche sich in dem genannten Abteil (6) erstreckt, daß der elektrische Widerstand (14), welcher in dem umschlossenen Raum (1), angebracht ist, direkt mit dem Netz über einen Unterbrecher (16) verbunden ist, der vie Versorgung dieses Widerstandes unabhängig von der des elektrischen Widerstandes (5) gestattet, welcher sich in dem Abteil (6) unter der Kochplatte (4) erstreckt.

2. Kochgerät nach Anspruch 1, dadurch gekennzeichnet, daß es einen Unterbrecher (16, 18) zur Steuerung der gleichzeitigen Versorgung der beiden elektrischen Widerstände (5, 14) umfaßt.

3. Kochgerät nach Anspruch 1 oder 2, dadurch gekennzeichnet, daß der elektrische Widerstand (14), welcher sich in dem umschlossenen Raum (1) erstreckt, in der Nähe des Bodens (15) desselben angeordnet ist und eine Leistung aufweist, die kleiner als die des in dem oberen Abteil (6) angeordneten Widerstandes ist.

4. Kochgerät nach einem der Ansprüche 1 bis 3, dadurch gekennzeichnet, daß die Metallplatte (7) einen Schlitz (8) aufweist, welcher sich unter dem Heizwiderstand (5) erstreckt und dessen Breite im wesentlichen dem Durchmesser dieses Widerstandes entspricht.

5. Kochgerät nach einem der Ansprüche 1 bis 4, dadurch gekennzeichnet, daß die Platte (4) eine behandelte Oberfläche aufweist, um Wärmestrahlung zu absorbieren, die von dem Widerstand (5) ausgeht.

6. Kochgerät nach einem der Ansprüche 1 bis 5, dadurch gekennzeichnet, daß die Temperatursonde (13), die in dem oberen Abteil (6) angebracht ist, eine Lamelle aus gut wärmeleitendem Metall ist, welche sich im wesentlichen in der Mitte des Abteils (6) zwischen der Kochplatte (4) und der Trennplatte (7) über eine Strecke erstreckt, die wenigstens gleich einem Drittel der Länge des Abteils ist.

7. Kochgerät nach einem der Ansprüche 1 bis 6, dadurch gekennzeichnet, daß der umschlossene Raum (1) zwei einander gegenüberliegende Seitenflächen aufweist, die jeweils durch eine Glastür (2, 3) geschlossen sind.

8. Kochgerät nach Anspruch 7, dadurch gekennzeichnet, daß die zwei anderen Seitenflächen (11, 11a) des umschlossenen Raumes (1) aus Blech und nicht wärmeisoliert sind.

FIG_1

FIG_2

$\underline{FIG\_3}$

$\underline{FIG\_4}$